# FASCICULE DE BREVET EUROPEEN

(11) **EP 2 321 152 B1**
(45) Date de publication et mention de la délivrance du brevet: **02.01.2013**
(21) Numéro de dépôt: 09740405.7
(22) Date de dépôt: 29.07.2009
(51) Int. Cl.: B60R 13/02, B29B 17/00

(54) **STRUCTURE MULTI-COUCHE A RECYCLER ET PROCEDE CORRESPONDANT**
ZU RECYCLIERENDE MEHRLAGIGE STRUKTUR UND ENTSPRECHENDES VERFAHREN
MULTILAYERED STRUCTURE TO BE RECYCLED, AND CORRESPONDING METHOD

(30) Priorité: 09.09.2008 FR 0856048
(43) Date de publication de la demande: 18.05.2011
(73) Titulaire: Renault S.A.S., 92100 Boulogne-Billancourt (FR)
(72) Inventeur: ABRAHAM, Fabrice, F-78200 Mantes-La-Jolie (FR); BOUILLON, Jean-Charles, F-78940 La Queue Lez Yvelines (FR)
(74) Mandataire: Rougemont, Bernard
(86) Numéro de dépôt international: PCT/FR2009/051521
(87) Numéro de publication internationale: WO 2010/029237

(56) Documents cités:
- EP-A- 0 732 182
- EP-B- 1 315 641
- JP-A- 2001 205 644
- JP-A- 2002 126 206
- US-B1- 6 299 961

## Description

La présente invention a pour objet une structure à recycler formée d'au moins deux couches de matériau comprenant un panneau principal de structure réalisé dans un premier matériau et sur lequel est monté un second panneau réalisé dans un second matériau souple. L'invention concerne plus particulièrement, l'identification de ladite structure par l'opérateur de recyclage.

L'invention concerne, d'autre part, un procédé de séparation sélective d'une structure à recycler formée d'au moins deux couches de matériau comprenant un panneau principal de structure réalisé dans un premier matériau et sur lequel est monté un second panneau réalisé dans un second matériau souple. La structure peut, par exemple, être des panneaux d'habillage de porte sur lesquels on vient adhériser un revêtement qui diffère selon la finition voulu du véhicule automobile. Il peut s'agir de toutes pièces gainées telles que des accoudoirs, des consoles, une coiffe de planche de bord, une coquille de dossier de siège.

L'invention concerne plus particulièrement le domaine automobile issu du démontage de véhicules arrivés en fin de vie. L'invention peut naturellement concerner un autre domaine que celui de l'automobile tel que, par exemple, l'aviation, les jouets, les produits électriques ou électroniques ou tout autre domaine nécessitant un recyclage de matériau en vue de leur valorisation.

Les nouvelles directives européennes de valorisation des véhicules, hors d'usage arrivés en fin de vie, exigent qu'ils soient traités en vue d'une valorisation qui doit, en particulier, prendre la forme d'un recyclage matière, par opposition à une seule valorisation thermique dans le cas des matériaux organiques de synthèse.

Ces matériaux organiques de synthèse, communément appelés matières plastiques, constituent une grande part des composants des pièces et sous-ensembles que l'on trouve aujourd'hui dans un véhicule automobile. Contrainte d'allégement, liberté de conception et facilité de mise en oeuvre sont autant de raisons justifiant ce choix d'utilisation des matières plastiques.

Dans l'automobile, il existe des pièces composées de multi-couches de matériaux, et notamment une pièce réalisée en matériau organique de synthèse sur lequel on adhérise un revêtement d'un matériau différent selon le niveau de gamme d'un véhicule. Les pièces réalisées en matériau multi-couches sont par exemple, des portes de véhicule automobile ou des accoudoirs de console centrale et de sièges ou des panneaux d'habillage de l'habitacle autre. Une telle structure selon le préambule de la revendication 1 est décrite dans EP1315641B. Or la composition de la pièce multicouche réalisée n'est jamais indiquée, précisément car le revêtement adhérisé change suivant les versions dudit véhicule. Il devient donc complexe pour un opérateur d'identifier à l'oeil nu, le type de matériau du revêtement.

Afin de simplifier le recyclage de pièces issues des opérations de démontage, d'identifier précisément les matériaux formant une pièce multicouche pour obtenir un gain de temps et donc de cout au recyclage associé à une répartition fiable des matériaux différents dans des filières de recyclage adaptées, il est donc un besoin de fournir une indication de la composition de cette pièce multicouche.

Ainsi, l'invention propose une structure à recycler formée d'au moins deux couches de matériau A, B comprenant un panneau principal réalisé dans un premier matériau A et sur lequel est monté un second panneau réalisé dans un second matériau B caractérisée en ce que le panneau principal comprend une zone d'indication d'une liste des différentes structures de matériaux A, B qu'un opérateur est susceptible de rencontrer lors d'un recyclage, le second panneau comportant un moyen de repérage d'au moins une structure comprise dans ladite liste que l'opérateur s'apprête effectivement à recycler.

Selon les autres caractéristiques de l'invention :
- la liste des différentes structures de matériaux peut être distribuée suivant une ligne sensiblement rectiligne ou courbe,
- la liste des différentes structures de matériaux peut être gravée sur le panneau principal ou moulée mais aussi inscrite sur une étiquette ou simplement écrite sur le panneau principal,
- le moyen de repérage peut se trouver au niveau d'une bordure du second panneau, ladite bordure avoisinant la liste des différentes structures de matériaux,
- le moyen de repérage peut être une découpe ou un index apte à préciser, dans ladite liste des différentes structures, laquelle l'opérateur s'apprête effectivement à recycler,
- la découpe peut être rectangulaire,
- l'index peut représenter une flèche, et
- il peut s'agir d'une porte de véhicule automobile ou d'un accoudoir ou d'un siège.

Le moule d'un panneau principal d'une telle structure comprend des contreformes de la liste des différentes structures de matériaux destinée à indiquer les structures de matériaux A, B qu'un opérateur est susceptible de rencontrer lors d'un recyclage.

Le moule comprend, en outre, des contreformes représentant lesdits moyens d'identification une fois le matériau démoulé, les moyens d'identification étant aptes à identifier le positionnement d'un élément polluant dans ledit matériau.

L'invention concerne également un procédé de recyclage d'une structure formée d'au moins deux couches de matériau A, B comprenant un panneau principal réalisé dans un matériau A et sur lequel est monté un second panneau réalisé dans un second matériau B caractérisé en ce qu'il comporte les étapes suivantes :
■ identification de la structure à recycler à l'aide d'un moyen de repérage, présent sur le second panneau, d'au moins une structure comprise dans une liste des différentes structures de matériaux (A, B) qu'un opérateur est susceptible de rencontrer, ladite liste figurant sur le panneau principal,
■ séparation du panneau secondaire d'avec le panneau principal,
■ disposition du panneau principal et du panneau secondaire dans deux filières de recyclage différentes.

On va maintenant décrire un exemple de mise en oeuvre de l'invention dans ses divers aspects et variantes, en référence aux dessins annexés dans lesquels :
- la figure 1 représente une vue schématique d'une porte selon l'invention comprenant un panneau secondaire à recycler selon 3 modes de réalisation 1, 2 et 3 de l'invention,
- la figure 2 représente le panneau principal vu par l'opérateur pendant la phase de recyclage,
- la figure 3 représente un premier exemple de réalisation de l'identification du matériau B du panneau secondaire à recycler selon l'invention,
- la figure 4 représente un second exemple de réalisation de l'identification du matériau B du panneau secondaire à recycler selon l'invention,
- la figure 5 représente une coupe selon A-A de la figure 4,
- la figure 6 représente un troisième exemple de réalisation de l'identification du matériau B du panneau secondaire à recycler selon l'invention, et
- la figure 7 représente un quatrième exemple de réalisation de l'identification du matériau B du panneau secondaire à recycler selon l'invention.

En références aux figures, il est représenté, selon un premier exemple d'application de l'invention, une porte 11 de véhicule automobile comportant une structure 10 à recycler.

La structure 10 à recycler est formée d'au moins une partie composée d'au moins deux couches de matériau A, B comprenant un panneau principal 12 réalisé dans un premier matériau A et sur lequel est monté un second panneau 14 réalisé dans un second matériau B.

Le matériau A est, par exemple, un matériau organique de synthèse tel que par exemple, du polypropylène (noté autrement PP). Le panneau principal 12 tel que précisé au dessus est, selon un mode de réalisation de l'invention, une partie d'un panneau d'habillage de porte de véhicule automobile. Le second panneau 14 réalisé dans un second matériau B va être adhérisé, sur le panneau principal 12 et est composé, par exemple, d'un matériau organique de synthèse tel qu'une mousse en polyuréthane ou une mousse en polypropylène. Un troisième matériau C peut aussi recouvrir le matériau B, il peut s'agir, par exemple, de polychlorure de vinyle, de cuir, de polyoléfine ou d'autres encore.

Selon l'invention, le panneau principal comprend une zone d'indication 16 d'une liste des différentes structures de matériaux, A, B et éventuellement C, qu'un opérateur est susceptible de rencontrer lors d'un recyclage, le second panneau comportant un moyen de repérage 18 d'au moins une structure comprise dans ladite liste que l'opérateur s'apprête effectivement à recycler.

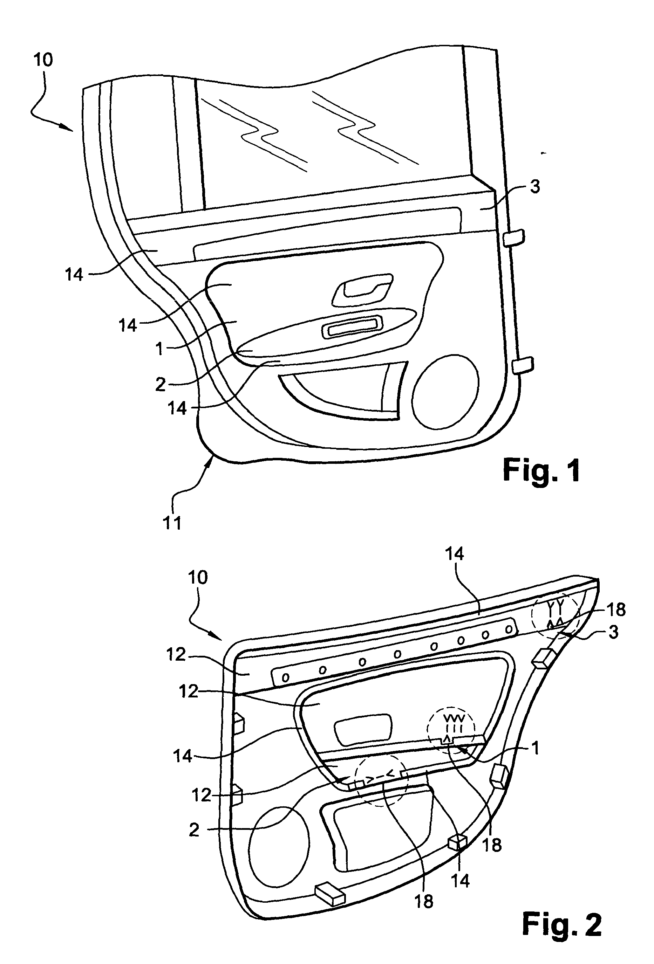

La zone d'indication 16 est fonction du nombre de structure de matériaux listé, par exemple, tel qu'illustré sur la figure 1, la zone d'indication comprend une liste de 3 structures :
- Pour un revêtement en polychlorure de vinyle (PVC : matériau C), un second panneau en mousse en polyuréthane (PUR-E : matériau B) et un panneau principal en polypropylène (PP : matériau A), le symbolisme suivant sera noté sur la zone d'indication du panneau principal :
   >PVC, PUR-E, PP<,
- Pour un revêtement en cuir (N : matériau C), un second panneau en mousse en polyuréthane (PUR-E : matériau B) et un panneau principal en polypropylène (PP : matériau A), le symbolisme suivant sera noté sur la zone d'indication du panneau principal :
   >N, PUR-E, PP<,
- Pour un revêtement en polyoléfine (TPO : matériau C), un second panneau en mousse en polypropylène (PP-E : matériau B) et un panneau principal en polypropylène (PP : matériau A), le symbolisme suivant sera noté sur la zone d'indication du panneau principal :
   >TPO, PP-E, PP<

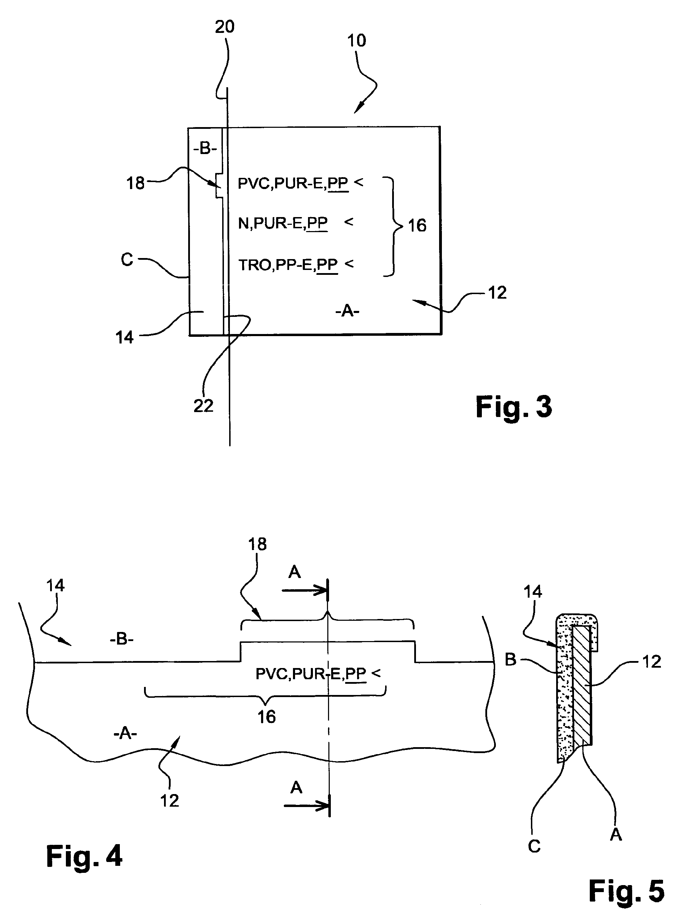

La liste des différentes structures de matériaux est distribuée, selon le premier mode de réalisation de la figure 3 suivant une ligne 20 sensiblement rectiligne ou courbe de manière à ce que le repérage du matériau s'effectue selon ladite ligne.

Selon ce premier mode de réalisation du panneau principal 12, la liste des différentes structures de matériaux peut être soit gravée sur le panneau principal grâce à des moyens connus de l'art antérieur ou moulée, par exemple, par injection, avec le panneau principal. La liste pourrait être aussi imprimée par jet d'encre, écrite sur une étiquette ou écrite directement sur le matériau A. Pour cela, le moule du panneau principal peut comprendre des contreformes de la liste des différentes structures de matériaux destinée à indiquer les structures de matériaux A, B et éventuellement C qu'un opérateur est susceptible de rencontrer lors d'un recyclage.

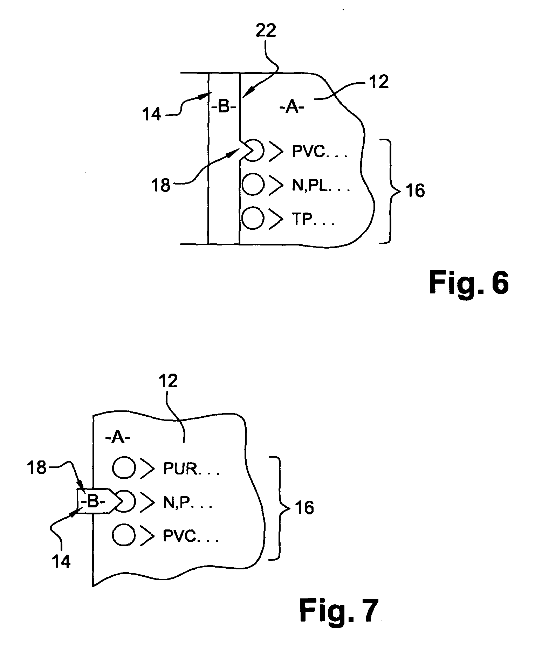

Une fois que la liste de structures que l'opérateur est susceptible de rencontrer est établie et gravée ou moulée ou écrite sur le panneau principal 12, il convient de savoir laquelle de ces structures est effectivement à recycler. Pour cela, un moyen de repérage 18 se trouve au niveau d'une bordure 22 du second panneau, ladite bordure 22 avoisinant la liste des différentes structures de matériaux. Selon l'invention, il convient de rappeler que le second panneau 14 est plaqué contre le panneau principal 12, le moyen de repérage 18 est une découpe pour les modes de réalisation des figures 2 à 5 ou un index pour les modes de réalisation des figures 6 et 7 apte à préciser, dans ladite liste des différentes structures, laquelle l'opérateur s'apprête effectivement à recycler pour distribuer les matériaux de la structure dans les bonnes filières de recyclage. La découpe se trouve précisément en face ou autrement dit à proximité de la nomination sur la zone d'indication de la structure que l'opérateur s'apprête effectivement à recycler. La découpe présente une forme sensiblement rectangulaire tel que représenté sur les figures 2, 3 et 4. Un index pourrait par exemple avoir la forme d'une flèche (cf. figure 6 et 7) pointant sur la nomination sur la zone d'indication de la structure que l'opérateur s'apprête effectivement à recycler. La figure 2 illustre d'ailleurs, les endroits où peut avoir lieu le recyclage. Ainsi, selon le mode de réalisation 1 sur l'habillage de la porte 11, la découpe est réalisée selon la figure 3 ; selon le mode de réalisation 2 sur l'accoudoir de la porte 11, la découpe est réalisée selon les figures 4 et 5 ; selon le mode de réalisation 3 sur le bandeau d'habillage de la porte 11, la découpe est réalisée selon la figure 6. Ainsi, en fonction de la structure à recycler et notamment du second panneau 14 comprenant, par exemple, un revêtement, l'emplacement du moyen de repérage sur la bordure 22 est associé à une structure particulière figurant dans la liste des différentes structures gravée ou moulée ou écrite sur le panneau principal.

L'invention concerne également un procédé de recyclage de la structure 10 formée d'au moins deux couches de matériau A, B et éventuellement C comprenant un panneau principal 12 réalisé dans un matériau A et sur lequel est monté un second panneau 14 réalisé dans un second matériau B caractérisé en ce qu'il comporte les étapes suivantes :
i. identification de la structure à recycler à l'aide du moyen de repérage 18, présent sur le second panneau 14, d'au moins une structure comprise dans une liste des différentes structures de matériaux (A, B, C) qu'un opérateur est susceptible de rencontrer, ladite liste figurant sur le panneau principal,
ii. séparation du panneau secondaire de son panneau principal,
iii. disposition du panneau principal et du panneau secondaire dans deux filières de recyclage différentes.

Ainsi, de part cette invention, le recyclage de pièces issues des opérations de démontage est simplifié car il est possible d'identifier précisément les matériaux formant ladite structure multicouche. Ceci permet d'obtenir un gain de temps et donc de cout au recyclage associé à une répartition fiable des matériaux différents dans des filières de recyclage adaptées.

Avantageusement, selon l'invention, la structure peut comprendre N couches de matériaux différents.

Il convient de noter que le matériau du panneau principal est plus dur que le matériau du second panneau présentant de la souplesse appréciée par simple pression sur celui-ci.

## Revendications

1. Structure à recycler (10) formée d'au moins deux couches de matériau (A, B) comprenant un panneau principal (12) réalisé dans un premier matériau A et sur lequel est monté un second panneau (14) réalisé dans un second matériau B **caractérisée en ce que** le panneau principal comprend une zone d'indication (16) d'une liste des différentes structures de matériaux (A, B) qu'un opérateur est susceptible de rencontrer lors d'un recyclage, le second panneau comportant un moyen de repérage (18) d'au moins une structure comprise dans ladite liste que l'opérateur s'apprête effectivement à recycler.

2. Structure selon la revendication 1, **caractérisée en ce que** la liste des différentes structures de matériaux est distribuée suivant une ligne (20) sensiblement rectiligne ou courbe.

3. Structure selon l'une des revendications précédentes, **caractérisée en ce que** la liste des différentes structures de matériaux est gravée sur le panneau principal ou moulée mais aussi inscrite sur une étiquette ou écrite sur le panneau principal.

4. Structure selon l'une des revendications précédentes, **caractérisée en ce que** le moyen de repérage (18) se trouve au niveau d'une bordure du second panneau, ladite bordure avoisinant la liste des différentes structures de matériaux.

5. Structure selon l'une des revendications précédentes, **caractérisée en ce que** le moyen de repérage est une découpe ou un index apte à préciser, dans ladite liste des différentes structures, laquelle l'opérateur s'apprête effectivement à recycler.

6. Structure selon la revendication 5, **caractérisé en ce que** la découpe est rectangulaire.

7. Structure selon la revendication 5, **caractérise en ce que** l'index représente une flèche.

8. Structure selon l'une des revendications précédente, **caractérisée en ce qu'**il s'agit d'une porte de véhicule automobile ou un accoudoir ou un siège.

9. Procédé de recyclage d'une structure (10) formée d'au moins deux couches de matériau (A, B) comprenant un panneau principal (12) réalisé dans un matériau A et sur lequel est monté un second panneau (14) réalisé dans un second matériau B **caractérisé en ce qu'**il comporte les étapes suivantes :
i. identification de la structure à recycler à l'aide d'un moyen de repérage, présent sur le second panneau, d'au moins une structure comprise dans une liste des différentes structures de matériaux (A, B) qu'un opérateur est susceptible de rencontrer, ladite liste figurant sur le panneau principal,
ii. séparation du panneau secondaire d'avec le panneau principal,
iii. disposition du panneau principal et du panneau secondaire dans deux filières de recyclage différentes.

## Claims

1. Structure to be recycled (10) formed by at least two layers of material (A, B) comprising a main panel (12) made of a first material A and on which is mounted a second panel (14) made of a second material B **characterized in that** the main panel includes an area (16) indicating a list of the different structures of materials (A, B) that an operator is likely to encounter during recycling, the second panel including a means (18) of identifying at least one structure included in said list that the operator is actually preparing to recycle.

2. Structure according to Claim 1, **characterized in that** the list of the different structures of materials is distributed on a substantially rectilinear or curved line (20).

3. Structure according to one of the preceding claims, **characterized in that** the list of the different structures of materials is etched on the main panel or moulded but also inscribed on a label or inscribed on the main panel.

4. Structure according to one of the preceding claims, **characterized in that** the identification means (18) is found at an edge of the second panel, said edge being close to the list of the different structures of materials.

5. Structure according to one of the preceding claims, **characterized in that** the identification means is a cutout or an index marker suitable for specifying, in said list of the different structures, the one that the operator is actually preparing to recycle.

6. Structure according to Claim 5, **characterized in that** the cutout is rectangular.

7. Structure according to Claim 5, **characterized in that** the index marker represents an arrow.

8. Structure according to one of the preceding claims, **characterized in that** it is a motor vehicle door or an armrest or a seat.

9. Method for recycling a structure (10) formed by at least two layers of material (A, B) comprising a main panel (12) made of a material A and on which is mounted a second panel (14) made of a second material B **characterized in that** it comprises the following steps:
i. identification of the structure to be recycled using a means of identifying, present on the second panel, at least one structure included in a list of the different structures of materials (A, B) that an operator is likely to encounter, said list appearing on the main panel,
ii. separation of the secondary panel from the main panel,
iii. arrangement of the main panel and of the secondary panel in two different recycling lines.

## Patentansprüche

1. Zu rezyklierende Struktur (10), bestehend aus mindestens zwei Materialschichten (A, B), umfassend eine Hauptplatte (12), die aus einem ersten Material A hergestellt ist und auf der eine zweite Platte (14) montiert ist, die aus einem zweiten Material B hergestellt ist, **dadurch gekennzeichnet, dass** die Hauptplatte eine Anzeigezone (16) einer Liste der verschiedenen Materialstrukturen (A, B), auf die ein Bediener bei einem Rezyklieren stoßen kann, umfasst, wobei die zweite Platte ein Erfassungsmittel (18) mindestens einer Struktur, die in der Liste enthalten ist und die sich der Bediener anschickt, wirksam zu rezyklieren, umfasst.

2. Struktur nach Anspruch 1, **dadurch gekennzeichnet, dass** die Liste der verschiedenen Materialstrukturen entlang einer im Wesentlichen geraden oder gebogenen Linie (20) verteilt wird.

3. Struktur nach einem der vorhergehenden Ansprüche, **dadurch gekennzeichnet, dass** die Liste der verschiedenen Materialstrukturen auf die Hauptplatte graviert oder geformt ist, aber auch auf ein Etikett oder auf die Hauptplatte geschrieben ist.

4. Struktur nach einem der vorhergehenden Ansprüche, **dadurch gekennzeichnet, dass** das Erfassungsmittel (18) im Bereich eines Randes der zweiten Platte angeordnet ist, wobei der Rand an die Liste der verschiedenen Materialstrukturen angrenzt.

5. Struktur nach einem der vorhergehenden Ansprüche, **dadurch gekennzeichnet, dass** das Erfassungsmittel ein Ausschnitt oder ein Index ist, der geeignet ist, in der Liste der verschiedenen Strukturen jene anzugeben, die sich der Bediener anschickt, tatsächlich zu rezyklieren.

6. Struktur nach Anspruch 5, **dadurch gekennzeichnet, dass** der Ausschnitt rechteckig ist.

7. Struktur nach Anspruch 5, **dadurch gekennzeichnet, dass** der Index einen Pfeil aufweist.

8. Struktur nach einem der vorhergehenden Ansprüche, **dadurch gekennzeichnet, dass** es sich um eine Kraftfahrzeugtür oder eine Armlehne oder einen Sitz handelt.

9. Verfahren zum Rezyklieren einer Struktur (10), die von mindestens zwei Materialschichten (A, B) gebildet ist, umfassend eine Hauptplatte (12), die aus einem Material A hergestellt ist, und auf der eine zweite Platte (14) montiert ist, die aus einem zweiten Material B hergestellt ist, **dadurch gekennzeichnet, dass** es die folgenden Schritte umfasst:
i. Identifizierung der zu rezyklierenden Struktur mit Hilfe eines Erfassungsmittels, das auf der zweiten Platte vorhanden ist, mindestens einer Struktur, die in einer Liste der verschiedenen Materialstrukturen (A, B), auf die ein Bediener stoßen kann, enthalten ist, wobei die Liste auf der Hauptplatte vorhanden ist,
ii. Trennung der Nebenplatte von der Hauptplatte,
iii. Anordnung der Hauptplatte und der Nebenplatte in zwei unterschiedlichen Rezyklieranlagen.
